# EUROPÄISCHE PATENTSCHRIFT

(11) **EP 2 423 532 B1**
(45) Veröffentlichungstag und Bekanntmachung des Hinweises auf die Patenterteilung: **04.12.2013**
(21) Anmeldenummer: 11176466.8
(22) Anmeldetag: 03.08.2011
(51) Int. Cl.: F16F 1/38, F16B 5/02, B60G 7/02

(54) **Stahlgummibuchse**
Steel rubber sleeve
Douille en caoutchouc d'acier

(30) Priorität: 31.08.2010 DE 102010036027
(43) Veröffentlichungstag der Anmeldung: 29.02.2012
(73) Patentinhaber: BPW Bergische Achsen KG, 51674 Wiehl (DE)
(72) Erfinder: Gmeiner, Swen, 51709 Marienheide (DE); Michels, Manfred, 51067 Köln (DE); Kopplow, Hans Werner, 51588 Nümbrecht (DE)
(74) Vertreter: Christophersen, Ulrich Rudolf

(56) Entgegenhaltungen:
- EP-A1- 0 639 721
- CN-Y- 201 110 336
- DE-A1- 3 228 051
- DE-A1- 3 318 288
- FR-A1- 2 214 067
- JP-A- 2006 250 234
- US-A- 1 911 866
- US-A- 3 572 677
- US-A- 4 002 327
- US-A- 5 352 044

## Beschreibung

Die Erfindung betrifft eine Stahlgummibuchse mit einer Stahlbuchse zur Aufnahme einer Schraube oder eines Bolzens in axialer Ausrichtung, einem auf der Außenseite der Stahlbuchse aufvulkanisierten Gummiring, und einem Distanzstück, welches mit der zylindrischen Innenseite der Stahlbuchse verbunden, und mit einer Durchgangsöffnung für die Schraube bzw. den Bolzen versehen ist.

Stahlgummibuchsen werden im Fahrzeugbau beispielsweise in den Fahrwerken verwendet und dienen dort dazu, Fahrwerksbauteile untereinander oder mit dem Chassis des Fahrzeugs zu verbinden. Dabei erfüllen sie durch die Verwendung von Elastomerwerkstoffen die Funktion der elastischen Lagerung. Andererseits sind sie aufgrund ihrer auch viskosen Eigenschaften in der Lage, Energie zu dissipieren, und auf diese Weise Schwingungen zu dämpfen.

Ein bevorzugtes Einsatzgebiet derartiger Stahlgummibuchsen, wie sie aus der US 3,572,677 A und in ähnlicher Ausgestaltung aus der US 1,911,866 A, FR 2 214 067 A und der DE 32 28 051 A bekannt sind, sind luftgefederte Fahrwerke von Schwerlastfahrzeugen und insbesondere Anhängerfahrzeugen. Die Achsen derartiger Fahrzeuge sind über Längslenker so mit dem Fahrzeugchassis verbunden, dass diese Verbindung ein Schwenken der Längslenker ermöglicht. In dem Schwenkgelenk sitzen gattunsgemäße Stahlgummibuchsen, deren Elastomerkörper aus üblicherweise Gummi in ein vorderes Auge des Längslenkers eingesetzt ist, wohingegen sich eine Schraube bzw. ein Bolzen zentral durch die Buchse hindurch sowie durch eine feste Stütze des Fahrwerks hindurch erstreckt. Eine in dem Gummiring sitzende Stahlbuchse nimmt an ihrer zylindrischen Innenfläche die Schraube bzw. den Bolzen auf. Die Stahlbuchse ist durch Vulkanisieren in dem Gummiring befestigt. Da hier in der Praxis auch Drehmomente übertragen werden, muss die für die Vulkanisierung zur Verfügung stehende Kontaktfläche ausreichend groß sein, weshalb der Außendurchmesser der Stahlbuchse nicht zu gering sein darf. Andererseits kann der Durchmesser der Schraube bzw. des Bolzens deutlich geringer sein als der Außendurchmesser der Stahlbuchse, weshalb für einen weitgehend spielfreien Sitz der Schraube bzw. des Bolzens in der Stahlbuchse diese eine entsprechende radiale Wandstärke aufweist. Diese Wandstärke macht einen großen Anteil am Gesamtgewicht der Stahlgummibuchse aus, weshalb der Erfindung die Aufgabe zugrunde liegt, zur Verwendung mit einer Schraube oder einem Bolzen vergleichsweise geringen Durchmessers eine Stahlgummibuche mit geringem Gewicht zu schaffen.

Zur Lösung wird eine Stahlgummibuchse mit einem aus Kunststoff bestehenden Distanzstück gemäß Anspruch 1 oder dem nebengeordneten Anspruch 2 vorgeschlagen.

Das Distanzstück überbrückt den radialen Abstand zwischen der zylindrischen Innenseite der Stahlbuchse und dem durch die Stahlgummibuchse hindurchführenden Bolzen und besteht aus Kunststoff und damit aus einem Werkstoff, der deutlich leichter ist als der Werkstoff der Stahlbuchse. Dadurch lässt sich auch bei Kombination mit einem schlanken Bolzen bzw. einer schlanken Schraube das beim Stand der Technik vor allem durch den Gewichtsanteil der Stahlbuchse bestimmte Gesamtgewicht der Stahlgummibuchse relativ niedrig halten.

Bevorzugte Ausgestaltungen der Stahlgummibuchse sind in den Unteransprüchen angegeben.

Um der besonderen Belastungssituation im Bereich der vorderen Schwenklagerung eines Längslenkers gerecht zu werden, kann die Stahlbuchse, bezogen auf den Außenumfang des Gummirings, exzentrisch in dem Gummiring angeordnet sein.

Zur Vergrößerung der Kontaktfläche für die Vulkanisierung wird vorgeschlagen, dass die axiale Breite des Gummirings im Bereich der Vulkanisierung einen Maximalwert aufweist, und von dort bis zum Außenumfang des Gummirings abnimmt, vorzugsweise degressiv abnimmt.

Das Distanzstück und die Stahlbuchse sind vorzugsweise durch einen Presssitz miteinander verbunden. Ebenfalls bevorzugt ist eine Ausgestaltung, bei der das Distanzstück ein Strangpressprofil ist.

Um das Gewicht der Stahlgummibuchse weiter zu reduzieren und Material dort einzusparen, wo dieses aus statischen und dynamischen Gründen nicht unbedingt benötigt wird, ist das Distanzstück auf seiner mit der Stahlbuchse verbundenen Außenseite derart mit nach außen offenen Kanälen oder Vertiefungen versehen, dass Distanzstück und Stahlbuchse nicht vollflächig sondern partiell in Kontakt stehen.

Weitere Einzelheiten und Vorteile ergeben sich aus der nachfolgenden Beschreibung von mehreren Ausführungsbeispielen, wobei auf die Zeichnungen Bezug genommen wird. Darin zeigen:
- Fig. 1: in einer vereinfachten Seitenansicht eine luftgefederte Fahrzeugachse insbesondere eines Anhängerfahrzeuges;
- Fig. 2: einen Schnitt gemäß der in Fig. 1 eingezeichneten Schnittebene II - II:
- Fig. 3: eine Stahlgummibuchse in perspektivischer Darstellung;
- Fig. 4: eine Ansicht in Achsrichtung der Stahlgummibuchse;
- Fig. 5: einen Schnitt längs der Achsrichtung durch die Stahlgummibuchse;
- Fig. 6: eine Ansicht in Achsrichtung einer zweiten Ausführungsform einer Stahlgummibuchse;
- Fig. 7: einen Schnitt längs der Achsrichtung durch die Stahlgummibuchse nach Fig. 6;
- Fig. 8: eine perspektivische Wiedergabe nur des Distanzstücks der Ausführungsform nach Fig.6;
- Fig. 9: eine dritte Ausführungsform einer Stahlgummibuchse
- Fig. 10: eine vierte Ausführungsform einer Stahlgummibuchse;
- Fig.11: eine perspektivische Wiedergabe nur des Distanzstücks der Ausführungsform nach Fig.10:
- Fig. 12: in perspektivischer Wiedergabe das Distanzstück einer weiteren Ausführungsform:
- Fig. 13: eine Ansicht des Distanzstücks einer weiteren Ausführungsform;
- Fig. 14: eine Ansicht des Distanzstücks einer weiteren Ausführungsform;
- Fig. 15: eine Ansicht des Distanzstücks einer weiteren Ausführungsform;
- Fig. 16: eine Ansicht des Distanzstücks einer weiteren Ausführungsform.

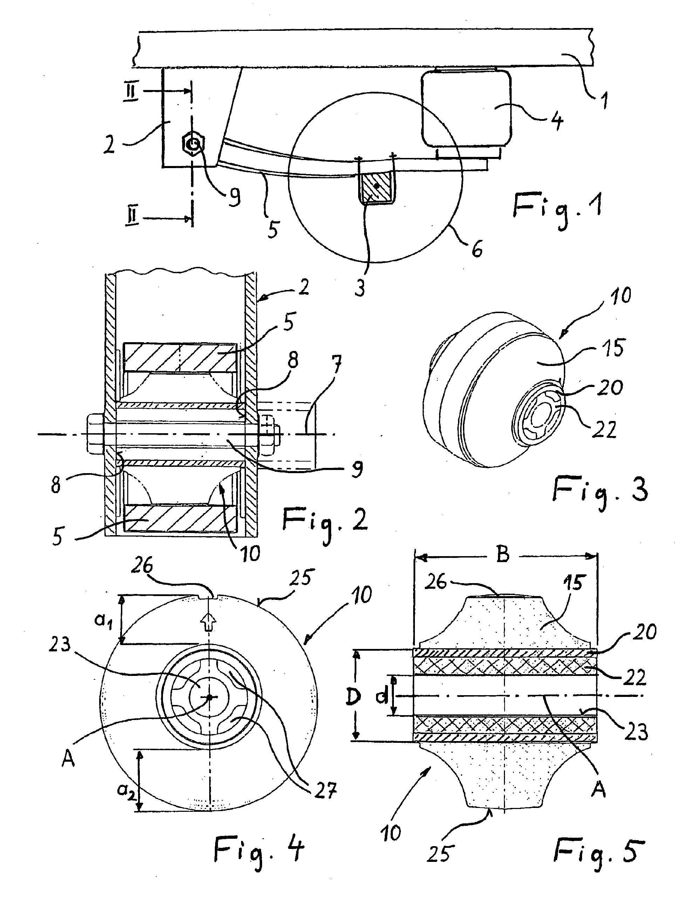

Die Fig. 1 zeigt stark vereinfacht ein luftgefedertes Fahrwerk einer Lkw-Anhängerachse. Unter dem Chassis 1 sind an beiden Fahrzeugseiten starre Stützen 2 befestigt, an denen in Schwenkachsen 7 Längslenker 5 schwenkgelagert sind. Weiter hinten an den Längslenkern 5 befestigt ist die Fahrzeugachse 3, an deren fahrzeugäußeren Enden die Räder 6 gelagert sind. In Fahrtrichtung hinten ist der Längslenker 5 über eine Luftfeder 4 gegenüber dem Chassis 1 abgestützt.

Zur Realisierung der Schwenkachse 7 ist das vordere Ende des Längslenkers 5 als Auge gestaltet, und eine Schraube bzw. ein Bolzen 9 ist zur schwenkbaren Anlenkung des Längslenkers zugleich durch das Auge und durch die starre Stütze 2 hindurch geführt.

In Fig. 2 ist in einem vertikalen Schnitt durch die Stütze 2 die durch das Auge des Längslenkers 5 gebildete Öffnung, die Schraube 9 bzw. der Bolzen sowie ferner eine Stahlgummibuchse 10 wiedergegeben, welche der Abstützung des vorderen Längslenkerendes gegenüber dem Bolzen 9 dient.

Einzelheiten der Stahlgummibuchse 10 sowie verschiedene Ausführungsformen hiervon werden im Folgenden anhand der weiteren Zeichnungen erläutert.

In den Fign. 3, 4 und 5 ist eine erste Ausführungsform der Stahlgummibuchse 10 wiedergegeben. Diese besteht aus insgesamt drei Bestandteilen, nämlich, von radial außen nach radial innen, einem Gummiring 15, einer Stahlbuchse 20 und einem Distanzstück 22. Der Gummiring 15 besteht aus Kautschuk oder einem Elastomer mit zugleich Federungsund Dämpfungsverhalten. Die Stahlbuchse 20 in Gestalt einer Hülse besteht vorzugsweise aus einer ausreichend festen Stahlverbindung. Bei der Werkstoffauswahl der Hülse 20 ist neben der radialen Festigkeit auch die Druckfestigkeit in Richtung der Achse A, und vor allem die gute Vulkanisierbarkeit mit dem Gummiring 15 von Bedeutung. Das Distanzstück 22 besteht aus Kunststoff. Sein spezifisches Gewicht ist deutlich geringer, als das spezifische Gewicht der Stahlhülse 20.

Der Gummiring 15 ist mit seiner zylindrischen Innenwandung auf die zylindrische Außenwandung mit Durchmesser D der Stahlbuchse 20 aufvulkanisiert. Zur Erzielung einer hinreichend großen Vulkanisierfläche ist dieser Außendurchmesser D der Stahlbuchse 20 groß dimensioniert, und ebenso die axiale Breite B dieser Vulkanisierfläche.

Für ein günstiges Verformungsverhalten besteht der Gummiring 15 aus Vollmaterial. Er weist im Bereich der Vulkanisierung einen Maximalwert an axialer Breite B auf, wobei von dort ausgehend die axiale Breite zum Außenumfang des Gummirings degressiv abnimmt, wie Fig. 5 erkennen lässt.

Im Hinblick auf die von der Stahlgummibuchse vor allem beim Einfedern des Fahrzeugs aufgenommene Belastung ist der Gummiring nicht symmetrisch in Bezug auf die mit der Schraube bzw. dem Bolzen zusammenfallende zentrale Achse A der Stahlgummibuchse. Vielmehr ist der Außenumfang 25 des Gummirings 15 exzentrisch in Bezug auf die Achse A und zugleich exzentrisch in Bezug auf die Stahlbuchse 20. Diese Exzentrizität ist dergestalt, dass in richtiger Einbaulage, d.h. Drehlage, der Stahlgummibuchse sich oben ein geringerer Abstand a1 zwischen Stahlbuchse 20 und Auge des Längslenkers 5 ergibt, als bei dem entsprechenden unteren Abstand a2. Eine Kerbe 26 oder eine vergleichbare Formstruktur im Außenfang 25 des Gummirings 15 stellt, in Verbindung mit einer korrespondierenden Struktur an dem Auge des Längslenkers 5, die richtige Drehlage der Stahlgummibuchse bei deren Montage sicher.

Die Stahlbuchse 20 ist relativ dünnwandig gestaltet, und zeichnet sich so durch ein geringes Gewicht aus. Durch Anziehen der vorzugsweise als Schraubbolzen gestalteten Schraube 9 wird die Stahlbuchse 20 zwischen den beiden Innenseiten 8 der Stütze 2 axial eingespannt, und kann so die von dem Gummiring 15 auf die Stahlbuchse 20 übertragenen Kräfte in die Stütze 2 weiterleiten. Der Schraubbolzen 9 ist daher von diesen Kräften weitgehend oder vollständig entlastet, er sorgt nur für die ausreichende axiale Einspannung der Stahlbuchse 20 in der Stütze.

Zur Überbrückung des verbleibenden Radialabstandes zwischen der Innenwandung der Stahlbuchse 20 und der Schraube bzw. dem Bolzen 9 ist in die Stahlbuchse 20 das aus einem leichteren Werkstoff bestehende Distanzstück 22 eingesetzt. Bei der hier beschriebenen, ersten Ausführungsform ist das Distanzstück 22, dessen zentrale Durchgangsöffnung 23 in etwa dem Durchmesser des Bolzens 9 entspricht, zur weiteren Gewichtsreduzierung mit Ausnehmungen oder Hohlräumen versehen. Wie die Ansicht Fig. 2 erkennen lässt, ist zu diesem Zweck das Distanzstück 22 auf seiner mit der Stahlbuchse 20 verbundenen Außenseite mit nach außen offenen Kanälen bzw. Vertiefungen 27 versehen. Das Distanzstück 22 stützt sich also nicht vollflächig in der Stahlbuchse 20 ab, sondern nur partiell, was aber ohne weiteres ausreichend ist.

Die Kanäle bzw. Vertiefungen 27 erstrecken sich bei der hier beschriebenen ersten Ausführungsform in axialer Richtung, sind also zu beiden Enden des Distanzstücks 22 hin offen. Ein derart gestaltetes Distanzstück 22 lässt sich produktionstechnisch einfach aus einem Strangpressprofil herstellen.

Die Befestigung des Distanzstücks 22 erfolgt vorzugsweise durch Verpressen in der Stahlbuchse 20, wozu der ursprüngliche Außendurchmesser des Distanzstücks 22 geringfügig größer als der zylindrische Innendurchmesser der Stahlbuchse 20 ist. Das Distanzstück 22 kann an beiden Enden bündig mit der Stahlbuchse 20 abschließen. Die Durchgangsöffnung 23 für den Bolzen 9 ist bei dieser Ausführungsform zylindrisch mit einem Durchmesser d, so dass eine maximale Druckübertragungsfläche zwischen Bolzen und Distanzstück zur Verfügung steht.

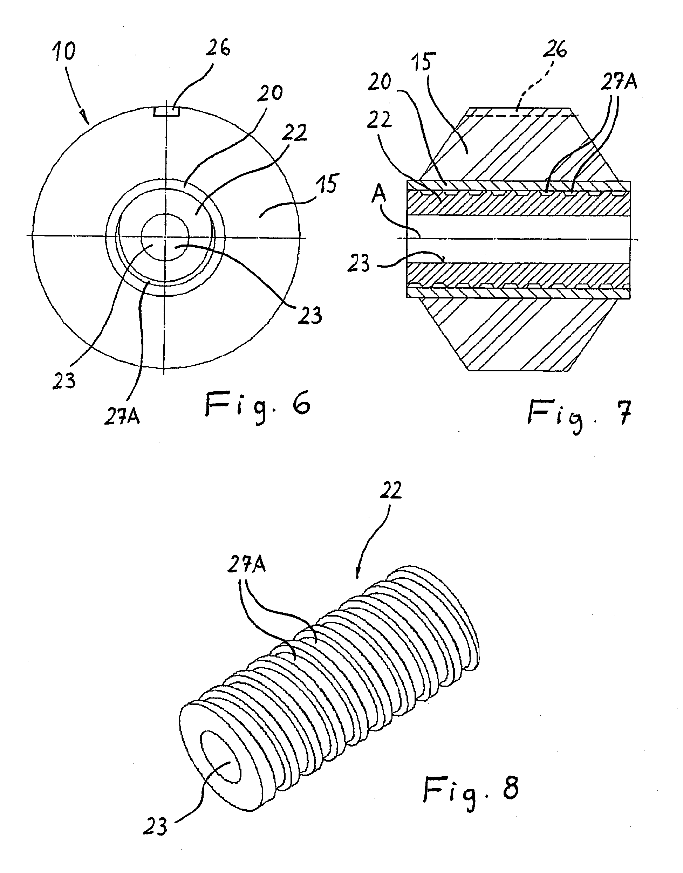

Bei der zweiten Ausführungsform nach den Fign. 6 und 7 ist das Distanzstück 22 auf seiner Außenseite ebenfalls mit Kanälen bzw. Vertiefungen 27A versehen, diese erstrecken sich jedoch nicht axial, d. h. in Richtung der zentralen Achse A, sondern in Gestalt einer Schraubenlinie bzw. Wendel. Auch mit dieser Variante lässt sich an dem Distanzstück 22 zusätzlich Gewicht einsparen, wobei Distanzstück 22 und Stahlbuchse 20 nicht vollflächig, sondern nur partiell in Kontakt stehen.

Die Fig. 8 zeigt zu der Ausführungsform nach Fig. 6 und 7 lediglich das Distanzstück 22 mit dem wendelförmig gestalteten Kanal 27A.

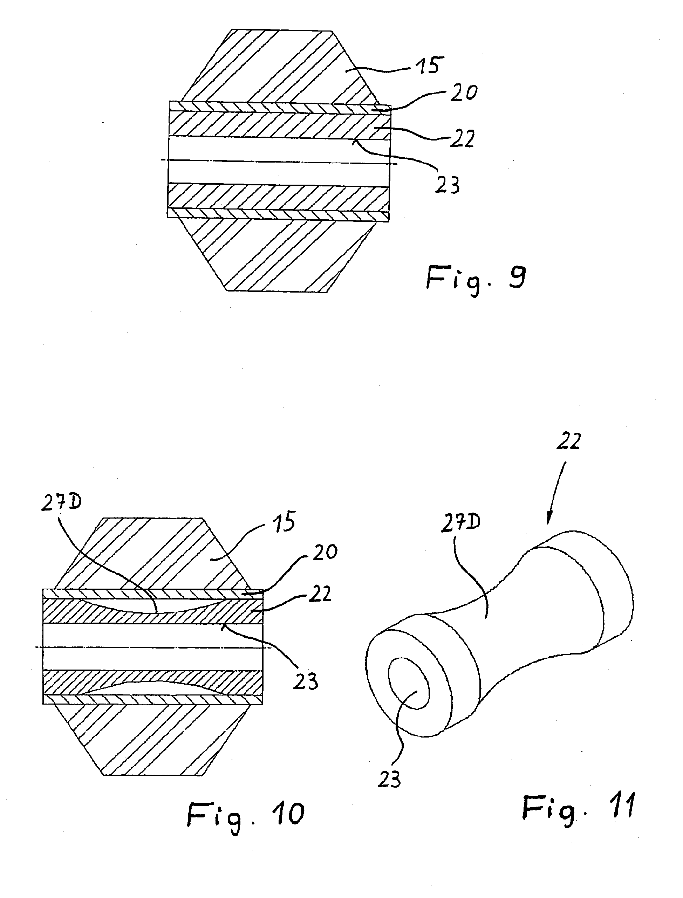

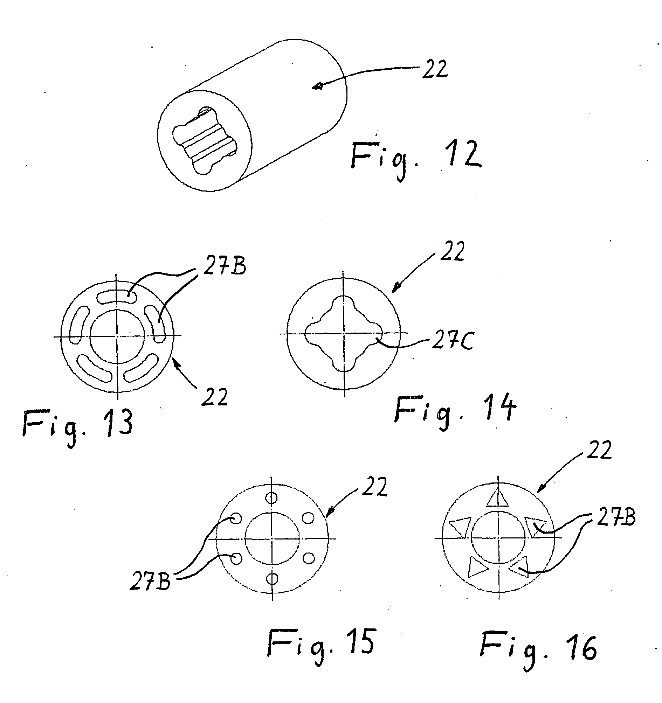

Bei der Ausführungsform nach Fig. 9 ist sowohl die innere als auch die äußere Mantelfläche des Distanzstücks 22 zylindrisch gestaltet. Das Distanzstück muss deshalb jedoch nicht aus Vollmaterial bestehen. Vielmehr können sich zur Gewichtseinsparung, wie in den Fign. 13, 15 und 16 illustriert, Kanäle 27B durch das Material hindurch erstrecken. Diese Kanäle können oval, elliptisch, rund, dreieckig, polygonal etc. sein.

Bei der Ausführungsform nach den Fign. 10 und 11 ist die innere Mantelfläche des Distanzstücks 22 zylindrisch, hingegen ist die äußere Mantelfläche auf ihrem Mittelabschnitt als Einschnürung 27D gestaltet, um so Material einzusparen.

Bei der Ausführungsform eines Distanzstücks nach den Fign. 12 und 14 befinden sich die gewichtssparenden Kanäle bzw. Vertiefungen 27C an der inneren Mantelfläche des Distanzstücks 22.

### Bezugszeichen

- 1: Chassis
- 2: Stütze
- 3: Achse
- 4: Luftfeder
- 5: Längslenker
- 6: Rad
- 7: Schwenkachse
- 8: Innenseite
- 9: Schraube, Bolzen
- 10: Stahlgummibuchse
- 15: Gummiring
- 20: Stahlbuchse
- 22: Distanzstück
- 23: Durchgangsöffnung
- 25: Außenumfang
- 26: Kerbe
- 27: Kanal, Vertiefung
- 27 A: Kanal, Vertiefung
- 27 B: Kanal
- 27 C: Kanal, Vertiefung
- 27D: Einschnürung

- A: Achse
- a 1: Abstand oben
- a 2: Abstand unten
- B: Breite
- D: Durchmesser
- d: Durchmesser

## Patentansprüche

1. Stahlgummibuchse mit einer Stahlbuchse (20) zur Aufnahme einer Schraube oder eines Bolzens in axialer Ausrichtung, einem auf der Außenseite der Stahlbuchse (20) aufvulkanisierten Gummiring (15), und einem Distanzstück (22), welches mit der zylindrischen Innenseite der Stahlbuchse (20) verbunden, und mit einer Durchgangsöffnung (23) für die Schraube bzw. den Bolzen versehen ist, **dadurch gekennzeichnet, dass** das Distanzstück (22) aus Kunststoff besteht und mit sich durch das Material hindurch erstreckenden Kanälen (27B) oder über seinen Umfang verteilt mit Kanälen und/oder Vertiefungen (27, 27A, 27 C) versehen ist.

2. Stahlgummibuchse mit einer Stahlbuchse (20) zur Aufnahme einer Schraube oder eines Bolzens in axialer Ausrichtung, einem auf der Außenseite der Stahlbuchse (20) aufvulkanisierten Gummiring (15), und einem Distanzstück (22), welches mit der zylindrischen Innenseite der Stahlbuchse (20) verbunden, und mit einer Durchgangsöffnung (23) für die Schraube bzw. den Bolzen versehen ist, **dadurch gekennzeichnet, dass** das Distanzstück (22) auf seiner mit der Stahlbuchse (20) verbundenen Außenseite derart mit nach außen offenen Kanälen oder Vertiefungen (27) versehen ist, dass das Distanzstück und die Stahlbuchse nicht vollflächig sondern partiell in Kontakt stehen.

3. Stahlgummibuchse nach Anspruch 1 oder 2, **dadurch gekennzeichnet, dass** die Stahlbuchse (20), bezogen auf den Außenumfang des Gummiring (15), exzentrisch in dem Gummiring angeordnet ist.

4. Stahlgummibuchse nach Anspruch 1, 2 oder 3, **dadurch gekennzeichnet, dass** die axiale Breite (B) des Gummirings im Bereich der Vulkanisierung einen Maximalwert aufweist und von dort bis zum Außenumfang (25) des Gummirings abnimmt, vorzugsweise degressiv abnimmt.

5. Stahlgummibuchse nach einem der Ansprüche 1 bis 4, **dadurch gekennzeichnet, dass** das Distanzstück (22) und die Stahlbuchse (20) durch einen Presssitz miteinander verbunden sind.

6. Stahlgummibuchse nach einem der vorangehenden Ansprüche, **dadurch gekennzeichnet, dass** das Distanzstück (22) ein Strangpressprofil ist.

7. Stahlgummibuchse nach Anspruch 1, **dadurch gekennzeichnet, dass** die Kanäle und/oder Vertiefungen (27, 27A, 27B, 27C) nierenförmig, oval, rund, eckig oder polygonal sind.

8. Stahlgummibuchse nach Anspruch 2, **gekennzeichnet durch** eine oder mehrere Einschnürungen (27D) in der Innen- und/oder in der Außenwand des Distanzstückes (22).

9. Stahlgummibuchse nach einem der vorangehenden Ansprüche, **dadurch gekennzeichnet, dass** die axiale Länge des Distanzstücks (22) gleich oder geringer als die axiale Länge der Stahlhülse (20) ist.

10. Stahlgummibuchse nach einem der vorangehenden Ansprüche, **dadurch gekennzeichnet, dass** die Durchgangsöffnung (23) des Distanzstücks (22) zentrisch bzw. koaxial zu der Innenseite der Stahlbuchse (20) ist.

11. Stahlgummibuchse nach einem der vorangehenden Ansprüche, **dadurch gekennzeichnet, dass** der Gummiring (15) an seinem Außenumfang eine in Umfangsrichtung wirksame Formschlussstruktur (26) aufweist.

## Claims

1. A steel rubber sleeve with a steel sleeve (20) for receiving a bolt or a pin in an axial orientation, a rubber ring (15) vulcanized onto the outside of the steel sleeve (20), and a spacer member (22) which is connected to the cylindrical inner side of the steel sleeve (20) and is provided with a through-opening (23) for the bolt or the pin respectively, **characterized in that** the spacer member (22) consists of plastics material and is provided with channels (27B) extending through the material or, distributed over its periphery, with channels and/or depressions (27, 27A, 27 C).

2. A steel rubber sleeve with a steel sleeve (20) for receiving a bolt or a pin in an axial orientation, a rubber ring (15) vulcanized onto the outside of the steel sleeve (20), and a spacer member (22) which is connected to the cylindrical inner side of the steel sleeve (20) and is provided with a through-opening (23) for the bolt or the pin respectively, **characterized in that** the spacer member (22) is provided on the outer side thereof connected to the steel sleeve (20) with channels or depressions (27) open towards the outside, in such a way that the spacer member and the steel sleeve are in contact not over their entire area but in part.

3. A steel rubber sleeve according to Claim 1 or 2, **characterized in that** the steel sleeve (20) is arranged eccentrically in the rubber ring (15) with respect to the external periphery of the rubber ring.

4. A steel rubber sleeve according to Claim 1, 2 or 3, **characterized in that** the axial width (B) of the rubber ring has a maximum value in the region of the vulcanization and it decreases, and preferably decreases degressively, from there as far as the external periphery (25) of the rubber ring.

5. A steel rubber sleeve according to any one of Claims 1 to 4, **characterized in that** the spacer member (22) and the steel sleeve (20) are connected to each other by a press fitting.

6. A steel rubber sleeve according to any one of the preceding Claims, **characterized in that** the spacer member (22) is an extruded profile.

7. A steel rubber sleeve according to Claim 1, **characterized in that** the channels and/or depressions (27, 27A, 27B, 27C) are reniform, oval, round, angular or polygonal.

8. A steel rubber sleeve according to Claim 2, **characterized by** one or more constrictions (27D) in the inner wall and/or in the outer wall of the spacer member (22).

9. A steel rubber sleeve according to any one of the preceding Claims, **characterized in that** the axial length of the spacer member (22) is equal to or less than the axial length of the steel sleeve (20).

10. A steel rubber sleeve according to any one of the preceding Claims, **characterized in that** the through-opening (23) of the spacer member (22) is central or coaxial with the inner side of the steel sleeve (20).

11. A steel rubber sleeve according to any one of the preceding Claims, **characterized in that** on its external periphery the rubber ring (15) has a positively locking structure (26) effective in the peripheral direction.

## Revendications

1. Douille en acier et caoutchouc, comportant une douille en acier (20) destinée à recevoir une vis ou un boulon dans la direction axiale, une bague en caoutchouc (15), vulcanisée sur la face extérieure de la douille en acier (20), et un écarteur (22), qui est relié à la face intérieure cylindrique de la douille en acier (20) et est muni d'une ouverture de passage (23) pour la vis ou le boulon, **caractérisée en ce que** l'écarteur (22) est réalisé en matière plastique et comporte des conduits (27B) qui s'étendent à travers le matériau ou comporte des conduits et/ou creux (27, 27A, 27C) répartis sur son pourtour.

2. Douille en acier et caoutchouc, comportant une douille en acier (20) destinée à recevoir une vis ou un boulon dans la direction axiale, une bague en caoutchouc (15), vulcanisée sur la face extérieure de la douille en acier (20), et un écarteur (22), qui est relié à la face intérieure cylindrique de la douille en acier (20) et est muni d'une ouverture de passage (23) pour la vis ou le boulon, **caractérisée en ce que** l'écarteur (22), sur sa face extérieure reliée à la douille en acier (20), est muni de conduits ou creux (27) ouverts vers l'extérieur, de telle sorte que l'écarteur et la douille en acier sont en contact partiellement et non pas sur toute leur surface.

3. Douille en acier et caoutchouc selon la revendication 1 ou 2, **caractérisée en ce que** la douille en acier (20), par rapport à la périphérie extérieure de la bague en caoutchouc (15), est agencée excentriquement dans ladite bague en caoutchouc.

4. Douille en acier et caoutchouc selon la revendication 1, 2 ou 3, **caractérisée en ce que** la largeur axiale (B) de la bague en caoutchouc possède une valeur maximale dans la zone de la vulcanisation et décroît à partir de là vers la périphérie extérieure (25) de la bague en caoutchouc, elle décroît de préférence de manière dégressive.

5. Douille en acier et caoutchouc selon l'une quelconque des revendications 1 à 4, **caractérisée en ce que** l'écarteur (22) et la douille en acier (20) sont reliés l'un à l'autre par un ajustement sans jeu.

6. Douille en acier et caoutchouc selon l'une quelconque des revendications précédentes, **caractérisée en ce que** l'écarteur (22) est un profilé extrudé.

7. Douille en acier et caoutchouc selon la revendication 1, **caractérisée en ce que** les conduits et/ou creux (27, 27A, 27B, 27C) sont réniformes, ovales, ronds, angulaires ou polygonaux.

8. Douille en acier et caoutchouc selon la revendication 2, **caractérisée par** un ou plusieurs resserrements (27D) dans la paroi intérieure et/ou dans la paroi extérieure de l'écarteur (22).

9. Douille en acier et caoutchouc selon l'une quelconque des revendications précédentes, **caractérisée en ce que** la longueur axiale de l'écarteur (22) est égale ou inférieure à la longueur axiale de la douille en acier (20).

10. Douille en acier et caoutchouc selon l'une quelconque des revendications précédentes, **caractérisée en ce que** l'ouverture de passage (23) de l'écarteur (22) est centrée ou coaxiale à la face intérieure de la douille en acier (20).

11. Douille en acier et caoutchouc selon l'une quelconque des revendications précédentes, **caractérisée en ce que** la bague en caoutchouc (15) comporte, sur sa périphérie extérieure, une structure emboîtable (26) active dans la direction circonférentielle.
